# EUROPÄISCHE PATENTSCHRIFT

(11) **EP 0 536 608 B1**
(45) Veröffentlichungstag und Bekanntmachung des Hinweises auf die Patenterteilung: **10.12.1997**
(21) Anmeldenummer: 92116457.0
(22) Anmeldetag: 25.09.1992
(51) Int. Cl.: G03C 3/00, B65H 75/14, G03B 27/58

(54) **Lichtdichte Wickelrolle**
Light-tight reel
Noyau d'enroulement opaque à la lumière

(30) Priorität: 10.10.1991 DE 4133530
(43) Veröffentlichungstag der Anmeldung: 14.04.1993
(73) Patentinhaber: E.I. DU PONT DE NEMOURS AND COMPANY, Wilmington Delaware 19898 (US)
(72) Erfinder: Loewe, Erhard, W-6233 Kelkheim (DE); Konkol, Klaudius, W-6078 Neu-Isenburg (DE)
(74) Vertreter: Pistor, Wolfgang, Dr. Dipl.-Chem.

(56) Entgegenhaltungen:
- EP-A- 0 230 057
- DE-U- 8 905 036
- US-A- 4 455 076
- PATENT ABSTRACTS OF JAPAN, Band 13, no. 180 (P-864)(3528), 27 April 1989

## Beschreibung

Die Erfindung bezieht sich auf eine lichtdichte Wickelrolle von bahnförmigem Material, insbesondere Filmmaterial.

Bei der Verpackung von lichtempfindlichem Filmmaterial, beispielsweise für Lichtsatzgeräte oder Geräte der Röntgenfotografie, werden Wickelrollen und Filmkassetten verwendet. Sie schützen das fotografische Material vor Lichteinfall und vor mechanischen Einwirkungen.

Verglichen mit Filmkassetten sind Wickelrollen die kostengünstigere Verpackungsform.

Eine einfache und in der Vergangenheit häufig angewendete Verpackungsmethode ist das allseitige Umhüllen der Filmrolle mit einer lichtdichten Folie. Dieser manuelle Verpackungsvorgang wurde automatisierbar, als man die Stirnseiten der Wickelhülse durch lichtundurchlässige, sogenannte Bordscheiben schützte und die Abdeckfolie nur noch um die Mantelfläche der Spule wickeln mußte. Bei dieser Ausführungsform einer Wickelrolle konnte die Abdeckfolie nun als Vorspann zur Filmbahn gewickelt werden. Die Bordscheiben bestehen aus einem lichtundurchlässigen Kunststoff, der in Spritzgußtechnik geformt wird. Die Wickelhülse kann ein Papp-, Papier- oder Kunststoffkern sein.

Den geforderten lichtdichten Abschluß zwischen Abdeckfolie und Bordscheiben kann man, - wie beispielsweise in EP 0 326 260 für die Wickelrolle einer Filmkassette beschrieben -, durch Verkleben von Abdeckfolie und Bordscheibe erreichen; die Bordscheibe muß hierfür lediglich genügend breit ausgeführt sein.

Bei der Verwendung des Films wird nun die Wickelrolle in die Entnahmevorrichtung eines Verarbeitungsgerätes gelegt. Diese Entnahmevorrichtung kann entweder aus einer Filmkassette bestehen, die dann Teil des Verarbeitungsgerätes ist, oder einfach durch zwei Aufnahmedornen gebildet werden, zwischen denen die Wickelrolle drehbar gelagert und mittels einer Klemmvorrichtung fixiert wird. Die Abdeckfolie wird teilweise abgewickelt und durch einen lichtdichten Schlitz geführt. Anschließend wird das Gerät verschlossen. Ein weiteres Ziehen der Abdeckfolie bewirkt, daß der Filmanfang vom Fördermechanismus erfaßt und in den Belichtungsbereich des Verarbeitungsgerätes transportiert wird. Die Filmspule ist geladen, das Gerät betriebsbereit.

Diese Filmverpackung hat den entscheidenden Vorteil, daß die Handhabung im Hellen, also unter Tageslicht erfolgen kann. Für den Filmwechsel ist keine Dunkelkammer erforderlich. Sogenannte tageslichtverpackte Filmrollen sind seit längerer Zeit erfolgreich am Markt. Eine tageslichtverpackte Filmrolle ist beispielsweise aus US 4,148,395 bekannt. Diese Filmverpackung besteht im wesentlichen aus einer Verbundfolie und setzt sich aus drei Teilen zusammen. Ein bahnförmiges, lichtundurchlässiges Stück der Verbundfolie ist als Vorspann um die Filmrolle gewickelt und mit einem Klebstreifen an der Filmrolle befestigt. Zwei scheibenförmige Seitenteile schützen die Stirnseiten der Filmrolle vor Lichteinfall. Sie sind über stulpenförmige Randflächen mit der äußeren Umfangsfläche der zylindrischen Filmrolle verklebt. Mit Hilfe dieser Verpackung kann ein lichtempfindliches Filmmaterial unter Tageslicht in die geöffnete Kassette eines Verarbeitungsgerätes gelegt, der Klebstreifen samt Vorspann gelöst und durch den Ausgabeschlitz der Kassette geführt werden, ohne daß dabei das Filmmaterial unbeabsichtigt belichtet wird. Nachdem die Kassette wieder verschlossen wurde, wird durch Herausziehen des Vorspanns dessen Verbindung zu den Seitenteilen gelöst. Die lichtdichte Verpackung hat sich in der verschlossenen Kassette geöffnet. Das Filmmaterial kann im Verarbeitungsgerät verwendet werden. Diese Verpackung schützt das Filmmaterial aber nicht vor mechanischen Beschädigungen, die während des Transports auftreten können und häufig die Stirnseiten deR Filmrolle beschädigen.

In EP 03 50 093 ist eine lichtdichte Verpackung für bahnförmiges Filmmaterial beschrieben, bei der eine Verpackungsfolie sowohl die Mantel- als auch die Stirnfläche eines Filmwickels umhüllt. Es ist über einen Vorspann mit der Filmbahn verbunden und überragt deren Breite so weit, daß durch Umklappen der überstehenden Ränder auch die beiden Stirnflächen des Filmwickels lichtdicht abgedeckt werden können.

Das Umklappen geschieht entlang bevorzugter Linien, die durch eine unterschiedliche Knickeigenschaft des Verpackungsmaterials vorgegeben werden. An der inneren Mantelfläche der Wickelhülse können die Endstreifen der Verpackungsfolie durch Wärmezufuhr versiegelt werden, oder - wenn die Wickelhülse aus entsprechendem Material gefertigt ist - auch mit der Wickelhülse verschweißt werden. Die Verpackungsfolie besteht vorzugsweise aus einer metallisierten Polymerfolie. Für Filmrollen mit großem Wickelradius ist vorgesehen, die Verpackungsfolie aus drei Teilen zu fertigen, aus einer, mit dem Vorspann verbundenen, bahnförmigen Verpackungsfolie und aus zwei scheibenförmigen Folienteilen.
Erstere überragt die Breite des Filmwickels, letztere überragen den Außendurchmesser des Filmwickels. Durch Einwirkung von Wärme werden die so gebildeten äußeren stirnseitigen Folienränder lichtdicht versiegelt. Die inneren Folienränder können mit der inneren Mantelfläche der Wickelhülse verschweißt werden. Auch diese Verpackung schützt das Filmmaterial kaum vor mechanischen Beschädigungen. Da das Versiegeln der Verpackungsfolie die Zufuhr von Wärme erfordert, kann es vorkommen, daß bei bestimmten Filmmaterialien, beispielsweise bei Filmen die durch Wärme entwickelt werden, die bildaufzeichnende Beschichtung des Filmmaterials zerstört wird. Durch Klebstoff versiegelte Filmverpackungen sind in der Herstellung teuer und können zu Verunreinigungen des Filmmaterials bzw. des Verarbeitungsgerätes führen.

Aus US 4,455,076 ist eine lichtdichte Wickelrolle bekannt deren äußere Mantelfläche mit einer lichtundurchlässigen Abdeckfolie umwickelt ist und deren Stirnseiten durch starrwandige Bordscheiben abgedeckt werden. Die Abdeckfolie ist als Verbundfolie ausgeführt und besteht aus einer aluminiumbeschichteten Polyäthylenschicht und aus einer Schicht Polyester. Diese Verbundfolie haftet auf einem Papierträger, und ist gegenüber diesem und gegenüber der Filmbreite um etwa 4 mm bis 6 mm breiter. Als Vorspann umschließt diese Mehrschichtfolie mehrlagig den Filmwickel, wobei sich die etwas breitere Verbundfolie an die, zum Filmwickel hin liegenden Seitenflächen der Bordscheiben anschmiegt und so das Filmmaterial vor Lichteinfall schützt.
Die Bordscheiben sind reibschlüssig über konusförmige Ansätze mit der Wickelhülse verbunden. Die axiale Abmessung der Filmrolle wird um die Wandstärke der beiden Bordscheiben vergrößert. Der Durchmesser für die Aufnahme der Wickelrolle verrringert sich gegenüber dem Durchmesser der Wickelhülse um die doppelte Wandstärke des Ansatzes.

Aus dem Abstract JP 1-10242 ist bekannt, die äußere Stirnfläche einer Filmspule mit einer ringförmigen Ausnehmung zu versehen, wodurch das Abrollen des Filmmaterials erleichtert wird.

Grundsätzlich könnte man für die lichtdichte Verpackung einer Filmrolle auch eine Schrumpffolie, wie sie beispielsweise aus der Lebensmitteltechnik bekannt ist, verwenden. Durch den Schrumpfvorgang der Folie um die Bordscheiben wäre auch ein ausreichender mechanischer Halt der Wickelrolle gegeben. Da aber die gewünschte Verstreckung des Folienmaterials nur durch Einwirkung äußerer Wärme erreicht wird, diese aber für das vorliegende Verpackungsgut höchst unerwünscht ist, scheidet eine Schrumpffolienverpackung für Filmrollen aus.

Bei fast allen Belichtungsgeräten ist der axiale Abstand zwischen den Aufnahmedornen für die Wickelrolle einstellbar.
Dieser einstellbare Klemmechanismus ermöglicht, daß die Geräte unterschiedliche Filmformate und somit unterschiedlich breite Wickelrollen verarbeiten können.

Seitens der Filmhersteller ist man bestrebt die Wickelrolle so zu bemessen, daß sie in möglichst viele Verarbeitungsgeräte, auch unterschiedlicher Firmen, paßt. M.a.W. der Filmhersteller muß die Verpackung seines Films auf die vom Gerätehersteller vorgesehene Entnahmevorrichtung anpassen, was insbesondere Vorgaben für die Breite und für die Größe des Innendurchmessers der Wickelrolle bedeutet.

Bei einer Vielzahl der am Markt befindlichen Geräte ist der vorgegebene Einbauraum für die Wickelrolle sehr knapp bemessen. Häufig dann, wenn man das größte Filmformat eines Gerätes nutzen will, überragt - wenn auch nur geringfügig die Wickelrolle in ihrer Breite die lichte Breite des Einbauraums. Der Wickel paßt nicht in das Verarbeitungsgerät, der Film ist in diesem Gerät nicht verwendbar. Entweder haben die aufgesteckten Bordscheiben die Wickelrolle unzulässig verbreitert, oder der Innendurchmesser der Wickelhülse wurde so weit verringert, daß er - trotz des hier üblicherweise stets vorhandenden Spiels - nicht auf den Dorn der Entnahmevorrichtung gespannt werden kann.

Entsprechend den vorliegenden Maßtoleranzen kann es sogar vorkommen, daß die Wickelrolle eines Filmherstellers einmal in ein Verarbeitungsgerät paßt, ein anderes mal aber, u.U. bei einem Gerät gleichen Typs, nicht geladen werden kann. Anders ausgedrückt, die vorliegenden Toleranzfelder von Einbauraum und von Wickelrolle bestimmen beim Anwender die Nutzungsmöglichkeiten des Produkts.

Berücksichtigt man diese Gegebenheiten, wäre eine Verpackung wünschenswert, die die Abmessungen der Filmrolle kaum verändert. Es ist leicht einzusehen, daß diese Forderung schwer zu realisieren ist, da teils gegensätzliche Anforderungen erfüllt werden müssen: Einerseits muß die Verpackung lichtdicht sein. Dies bedeutet beispielsweise eine genügend breite Klebefläche an der Bordscheibe für das Verkleben der Abdeckfolie. Die Bordscheibe muß außerdem stabil mit der Wickelhülse verbunden werden können - was ebenfalls auf dickwandige Bordscheiben führt. Andererseits sollen sie,-dem begrenzten Einbauraum entsprechend -, möglichst dünnwandig sein.

Bordscheiben, die in ihrem Innenbereich mit einem buchsenförmigen Ansatz versehen sind und mit diesem, beispielsweise durch Klemmung, an der äußeren wickelseitigen Mantelfläche der Wickelhülse befestigt sind, können, wegen der geforderten ebenen Auflagefläche für die Filmrolle, nicht verwendet werden.

Seitens der Filmhersteller erhebt sich darüber hinaus die Forderung, alle Einzelkomponenten einer Wickelrolle möglichst einheitlich zu gestalten. Die Bordscheiben sollen universell für verschiedene Filmbreiten und Belichtungsgeräte verwendet werden können. Man will bei der Herstellung und bei der Verpackung - beides erfolgt unter Ausschluß von Tageslicht-etwaige Verwechslungen durch ähnliche Bordscheiben vermeiden. Ferner ist es vorteilhaft, nur einen Typ einer Wickelhülse, die in ihrer Länge dem Filmformat angepaßt wird, zu verwenden.

Ferner soll nach der Verwendung des Films die Verpackung auf einfache Weise in ihre unterschiedlichen Materialien getrennt und einem Recycling-Verfahren zugeführt werden können.

Grundsätzlich löst diese Aufgabe die in DE-U- 89 05 036 beschriebene Wickelrolle. Ihre Bordscheiben sind äußerst dünnwandig ausgeführt. Sie werden einfach auf die Wickelhülse gesteckt und haften dort durch Klemmnocken.

Nun hat es sich aber gezeigt, daß starke Stoßbeanspruchung während des Transports in Einzelfällen zu einer Lockerung der Bordscheiben führen kann. Bedingt durch die geringe Wirkfläche zwischen Bordscheibe und Wickelhülse - sie wird durch die Wanddicke der Bordscheiben vorgegeben - kann es bis hin zum Teleskopieren des Wickels kommen. Darüber hinaus ergab sich, daß die Klemmschlitze dieser Bordscheiben, auch bei sehr enger Ausführung, das Filmmaterial nicht zuverlässig vor Lichteintritt schützen können. Obwohl diese Belichtung zwar auf den äußeren Randbereich des Films beschränkt bleibt, ist sie grundsätzlich unerwünscht.

Auch beim mantelseitigen Lichtschutz, der bei dieser Filmrolle aus einer umwickelten, sich an die wickelseitigen Wandungsflächen der Bordscheiben schmiegenden, lichtdichten Abdeckfolie besteht, kann es ebenfalls zu Lichteintritt kommen: Bei fehlerhafter Wickelspannung entsteht im Randbereich der Abdeckfolie eine unerwünschte Wellenstruktur.
Im Verlauf des Transports kann es auch hier zu einer teilweisen unbeabsichtigten Belichtung der ersten Filmbahnen kommen.

Der Erfindung liegt die Aufgabe zugrunde, eine lichtdichte Wickelrolle anzugeben, die das Filmmaterial vor mechanischen Beschädigungen schützt, wobei die Breite des Filmwickels nicht wesentlich vergrößert wird.

Diese Aufgabe wird erfindungsgemäß durch die kennzeichnenden Merkmale des Anspruchs 1 gelöst. Aus den Unteransprüchen sind weitere vorteilhafte Merkmale entnehmbar.

Durch die Erfindung ist es möglich geworden, die Lichtdichtigkeit der Verpackung zu verbessern, ohne dabei die äußeren Abmessungen der Filmrolle wesentlich zu vergrößern.
Entscheidend für die Lösung der Aufgabe ist hierbei einmal die Umbördelung der Abdeckfolie um den erfindungsgemäß geformten Rand der Bordscheiben. Die ringförmige Ausnehmung 8 am äußeren Umfang der Bordscheibe nimmt die bei der Bördelung entstehende Wellenstruktur 41 der Abdeckfolie 4 auf. Bei geeigneter Wahl des Folienmaterials ist die Verformung der Folie plastisch, dh die Folie umwölbt eigenstabil die Formschulter am Umfang der Bordscheibe und es bedarf keiner zusätzlichen Verklebung. Für eine lichtdichte und dauerhafte Umhüllung sind, abhängig von den Materialeigenschaften der Abdeckfolie, ein oder mehrere Windungen erforderlich. Zum zweiten trägt die spezielle Formgebung von Ansatz und Nut im Innenbereich der Bordscheibe bei. Die konzentrische Nut 5, an der Innenseite jeder Bordscheibe angebracht, vergrößert die reibschlüssige Wirkfläche zur Aufnahme der Wickelhülse 2. Beide Merkmale zusammen verbessern entscheidend sowohl die Lichtdichtigkeit als auch die mechanische Stabilität der Verpackung. Die Breite der Filmrolle B2 wird mit diesen Bordscheiben aber nur geringfügig auf die Breite B1 der Wickelrolle erhöht. Dieses Merkmal ist insbesondere für das größte Filmformat entscheidend, da nun - dank der erfindungsgemäßen Verpackung-die Filmrolle problemlos in die lichte Breite des Einbauraums von Verarbeitungsgeräten verschiedener Hersteller paßt.

Ein Teleskopieren wird mit dieser Verpackung sicher verhindert.

Auch der Dorndurchmesser unterschiedlicher Verarbeitungsgeräte steht der Verwendung der Filmrolle nicht mehr entgegen. Der dünnwandige buchsenförmige Ansatz 6 hat nur unwesentlich den Innendurchmesser der Wickelhülse verringert. Die Filmrolle kann in Belichtungsgeräten unterschiedlicher Hersteller eingesetzt werden. Die geringe Wandstärke des Ansatz 6 ist insbesondere deswegen möglich, weil die Wickelhülse 2 zusätzlich in der ringförmigen Nut 5 der Bordscheibe 3 geklemmt wird.

Die Verbindung zwischen Bordscheibe und Wickelhülse ist so stabil, daß die Bordscheibe den Film beim Aufwickeln sogar führen kann. Überraschenderweise hat sich herausgestellt, daß zur Umbördelung der Abdeckfolie, bei der anfangs der äußere Rand der Folie lokal erwärmt wurde, gänzlich ohne Wärme erfolgen kann. Es genügt, das Aufwickeln der Abdeckfolie unter mechanischer Vorspannung durchzuführen. Dies erreicht man auf sehr einfache Weise, indem man beispielsweise die Drehzahl der Folienabwicklung um etwa 10% gegenüber der Drehzahl der Wickelrolle verringert. Antriebsregelungen dieser Art sind Stand der Technik.

Bordscheiben dieser Ausführungsform entsprechen den Verpackungsanforderungen von breiten und schmalen Filmformaten, sind also universell verwendbar.

Das Verpackungsmaterial kann nach Entnahme des Films leicht getrennt und einem Wiederaufbereitungsverfahren zugeführt, oder nach Sichtung u.U. sogar teilweise wieder verwendet werden.

Die Erfindung wird nachstehend anhand eines Ausführungsbeispiels und zugehörigen Zeichnungen näher erläutert. In diesen zeigen:
Fig. 1 eine Draufsicht auf die Wickelrolle in teilweise geschnittener Darstellung,
Fig. 2 einen Teillängsschnitt von Bordscheibe und Wickelhülse in vergrößerter Darstellung längs der Linie A-A aus Fig. 1,
Fig. 3 eine wickelseitig gesehene Seitenfläche der Bordscheibe,
Fig. 4 eine Seitenansicht der Wickelrolle im Zustand der Umwicklung mit der Abdeckfolie,
Fig. 5 die Abdeckfolie als Vorspann zur Filmbahn.

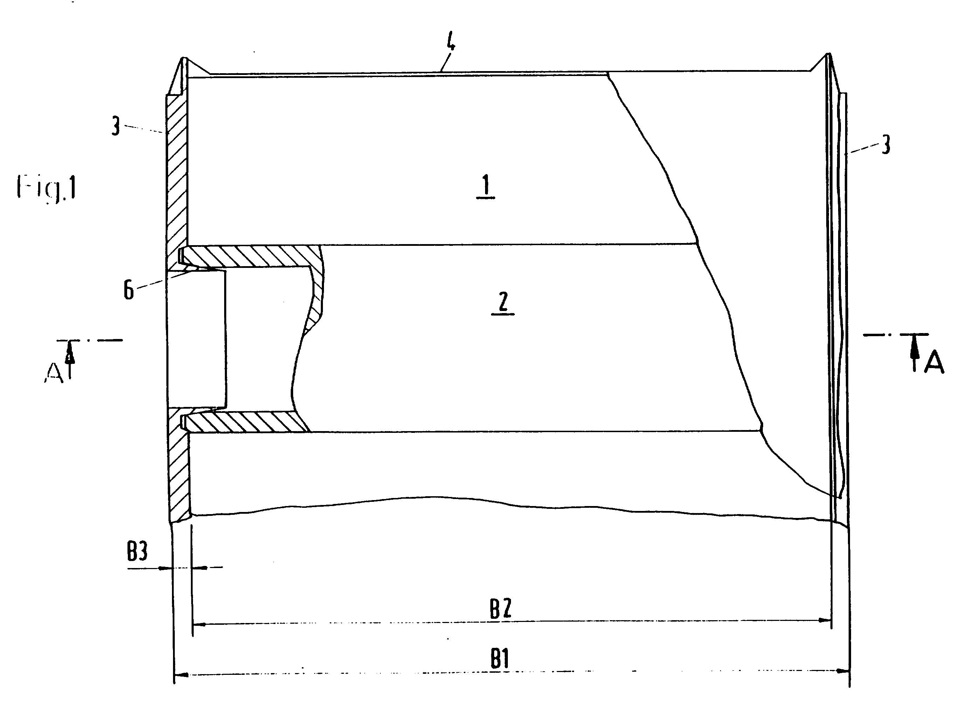

In Fig. 1 ist eine Wickelrolle in teilweise geschnittener Darstellung gezeigt. Das Filmmaterial umschließt spiralförmig die hohlzylindrische Wickelhülse 2, die ein Papp-, Papier- oder Kunststoffkern sein kann. Die Stirnseiten dieses Zylinders verschließen Bordscheiben 3. Diese sind wie die Wickelhülse aus lichtdichtem Material und werden durch Reibungskräfte, im wesentlichen durch Klemmung, an der inneren Mantelfläche der Wickelhülse gehalten. Die lichtundurchlässige Abdeckfolie 4 umhüllt die gesamte äußere Mantelfläche der Filmrolle. Sie umschließt auch den flanschförmig überstehenden Rand jeder Bordscheibe.

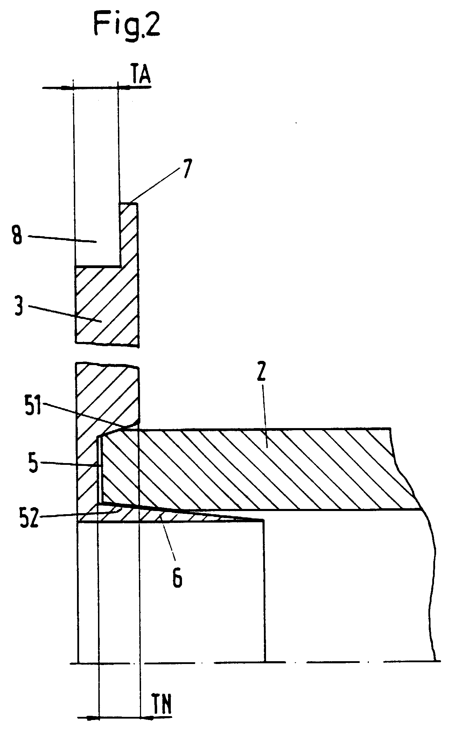

In Fig. 2 ist die Steckverbindung von Wickelhülse und Bordscheibe vergrößert dargestellt. Die von der Filmrolle abgewandten Seitenflächen der Bordscheiben weisen an der äußeren Umfangsfläche 7 jeweils eine Ausnehmung 8 auf. Diese Ausnehmung muß eine genügend große Tiefe TA aufweisen, um die bei der Bördelung entstehende Wellenstruktur 41 der Abdeckfolie 4 aufnehmen zu können. Durch die Ausnehmung 8 verbleibt an der äußeren Umfangsfläche jeder Bordscheibe ein Rand. Dieser Rand bildet für die Umbördelung der Abdeckfolie eine Formschulter. Die Formschulter muß einerseits so gestaltet sein, daß die Lichtdichtigkeit ausschließlich durch Kaltverformung der Folie erreicht werden kann. Die Flächenpressung muß also genügend groß sein. Andererseits darf die Bahn während des Bördelns nicht (ein)reißen.

Unerheblich ist die Form der Ausnehmung 8. Sie kann kontinuierlich zum äußeren Rand der Bordscheibe hin zunehmen, oder als Fassette ausgeführt sein.

Der in die Wickelhülse 2 gesteckte buchsenförmige Ansatz 6 der Bordscheibe 3 verringert grundsätzlich den Innendurchmesser der Wickelrolle. Bei genügend dünnwandig ausgeführtem Ansatz entsteht aber keine Überlappung der Toleranzfelder des Innendurchmessers der Wickelrolle und des Außendurchmessers des Aufnahmedorns. M.a.W., die geforderte Spielpassung zwischen der Wickelrolle und den am Markt befindlichen Verarbeitungsgeräten wird eingehalten, und die Verwendung des Films wird durch Herstellungstoleranzen nicht mehr eingeschränkt.

Diese Ausführungsform des buchsenförmigen Ansatzes ermöglicht die ringförmige Nut 5. Sie verleiht der Bordscheibe zusätzlichen Halt in der Wickelhülse, indem nun neben der konusförmigen Schrägfläche 52 auch die Nutflanke 51 auf den Randbereich der äußeren Mantelfläche der Wickelhülse drückt und die Klemmwirkung verstärkt.

Um die Bordscheibe und die Wickelhülse vor Verdrehung zu sichern, kann - wie aus Fig. 2 zu entnehmen ist - der buchsenförmige Ansatz 6 axiale Klemmrippen 9 aufweisen. Nicht in der Figur gezeigt, die Klemmwirkung aber ebenfalls erhöhend, bewirken auch Riffelungen oder Aufrauhungen der konusförmigen Wirkflächen 51;52. Da die Ausnehmung 8 auf der zur Filmspule abgewandten Seitenfläche der Bordscheibe liegt, die Nut 5 aber in der der Filmspule zugewandten Seite angebracht ist, wird, wie bereits erwähnt, die Breite des Films B2 durch diese Verpackung nur unwesentlich, - nämlich auf jeder Seite der Wickelrolle um die Differenz, gebildet aus der Breite B3 der Bordscheibe 3 und der Tiefe TN der Nut 5, - vergrößert. Dies ist entscheidend, wenn man das breiteste Filmmaterial in einem Verarbeitungsgerät verwenden will. Bei den vorherrschenden sehr engen Einbauverhältnissen hat es sich als günstig erwiesen, wenn die Tiefe TN der Nut 5 größer als die Tiefe TA der Ausnehmung 8 ist.

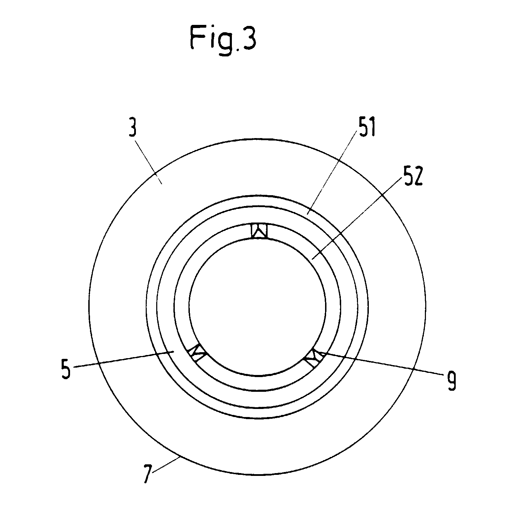

Fig. 3 zeigt die von der Filmrolle her gesehene Seitenfläche einer Bordscheibe. Eine bevorzugte Ausführungsform weist drei Klemmrippen 9 auf. Hierdurch wird neben der Klemmwirkung zusätzlich eine Zentrierung zwischen Bordscheibe und Wickelhülse erreicht.

Die Formgebung dieser Bordscheiben erfolgt vorzugsweise in Spritzgußtechnik aus Polyäthylen. Die bei diesem Herstellungsverfahren erforderlichen Ausformschrägen können bei der erfindungsgemäßen Bordscheibe leicht eingehalten werden.

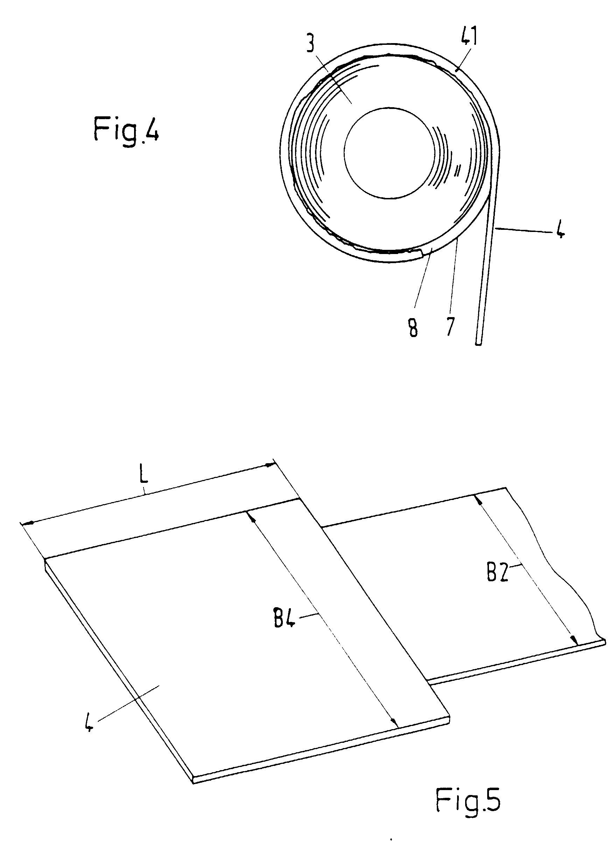

Fig. 4 zeigt die Seitenansicht einer Wickelrolle im Zustand des Aufwickelns der Abdeckfolie. Bedingt durch die Zugspannung umwölbt die Abdeckfolie 4 die, um die Ausnehmung 8 verminderte, äußere Umfangsfläche 7 der Bordscheibe 3. Der faltenbildende wellenförmige Randbereich der Abdeckfolie findet gänzlich in der Ausnehmung 8 platz. Dies erreicht man durch geeignete Wahl von Wickelspannung und der Breite B4 der Abdeckfolie 4. Die Breite B1 der Wickelrolle wird durch den gewellten Folienrand nicht überschritten.

Fig. 5 zeigt die Abdeckfolie als Vorspann zur Filmbahn. Nicht in der Figur gezeigt ist die Verbindung von Folie und Film, die beispielsweise ein Klebeband sein kann. Die Länge L der Abdeckfolie bestimmt sich aus der gewünschten Umschlingungszahl und beträgt meist ein Mehrfaches des äußeren Umfangs der Bordscheibe 3. Die Breite B4 der Abdeckfolie 4 ist größer als die Breite B2 der Filmbahn.

## Patentansprüche

1. Lichtdichte Wickelrolle bestehend aus spiralförmig auf eine zylindrische Wickelhülse aufgewickeltem lichtempfindlichem Material, die Stirnseiten der Filmrolle abdeckenden flanschförmigen Bordscheiben und einer lichtundurchlässigen, die Mantelfläche der Wickelrolle spiralförmig umschließenden Abdeckfolie, wobei die Wickelhülse auf buchsenförmigen Ansätzen der Bordscheiben gelagert ist,
**dadurch gekennzeichnet,**
daß die äußere Umfangsfläche (7) jeder Bordscheibe (3) stirnseitig eine ringförmige Ausnehmung (8) aufweist und die Abdeckfolie (4) um die äußere Umfangsfläche jeder Bordscheibe gebördelt wird, wobei die Umbördelung in der Ausnehmung liegt.

2. Lichtdichte Wickelrolle nach Anspruch 1 dadurch gekennzeichnet, daß die Ausnehmung (8) zum äußeren Umfang der Bordscheibe hin eine zulaufende Fassette ist.

3. Lichtdichte Wickelrolle nach Anspruch 1 dadurch gekennzeichnet, daß die Abdeckfolie (4) eine Breite (B4) aufweist die größer als die Breite (B2) der Filmrolle (1) ist.

4. Lichtdichte Wickelrolle nach Anspruch 1 dadurch gekennzeichnet, daß das Material der Abdeckfolie (4) schwarz pigmentiertes Polyäthylen ist.

5. Lichtdichte Wickelrolle nach Anspruch 1 dadurch gekennzeichnet, daß jede Bordscheibe (3) eine konzentrische Nut (5) aufweist deren Nutflanken (51; 52) zusammen mit dem buchsenförmigen Ansatz (6) der Bordscheibe konusförmige Wirkflächen bilden welche die Wickelhülse (2) steckbar aufnehmen und jede Bordscheibe reibschlüssig mit der Wickelhülse verbindet.

6. Lichtdichte Wickelrolle nach Anspruch 5 dadurch gekennzeichnet, daß die Tiefe (TN) der Nut (5) mindestens gleich der Tiefe (TA) der ringförmigen Ausnehmung (8) ist.

7. Lichtdichte Wickelrolle nach Anspruch 1 dadurch gekennzeichnet, daß der buchsenförmige Ansatz (6) der Bordscheiben (3) mindestens drei achsparallele Klemmrippen (9) trägt.

## Claims

1. Lightproof wound roll consisting of light-sensitive material helically wound on a cylindrical core, flange-shaped flanges covering the edge of the film roll, and a lightproof cover film helically enveloping the outer surface of the wound roll, whereby the core is positioned on bushing-like projection of the flanges, characterized in that the outer peripheral surface (7) of each flange (3) has on its face an annular recess (8), and cover film (4) is beaded around the outer peripheral surface of each flange, whereby the bead lies within the recess.

2. Lightproof wound roll as in Claim 1, characterized in that the recess (8) is a ring tapering to the outer periphery of the flange.

3. Lightproof wound roll as in Claim 1, characterized in that the width (B3) of the cover film (4) is greater than the width (B2) of the film roll (1).

4. Lightproof wound roll as in Claim 1, characterized in that the material of the cover film (4) is black pigmented polyethylene.

5. Lightproof wound roll as in Claim 1, characterized in that each flange (3) has a concentric slot (5), the flanks of which (51, 52), together with the bushing-like projection (6) of the flange, form conical effective surfaces that accept insertion of the core (2), and join each flange with the core in a friction union.

6. Lightproof wound roll as in Claim 5, characterized in that the depth (TN) of the slot (5) is at least equal to the depth (TA) of the annular recess (8).

7. Lightproof wound roll as in Claim 1, characterized in that the bushing-like projection (6) of the flanges (3) has at least three axially parallel locking ribs (9).

## Revendications

1. Rouleau d'enroulement étanche à la lumière, se composant d'un matériau photosensible enroulé en hélice sur un manchon d'enroulement cylindrique, de disques de rebord en forme de flasque recouvrant les faces frontales du rouleau de film, et d'une feuille de couverture opaque à la lumière entourant de manière hélicoïdale la surface extérieure du rouleau enroulé, le manchon d'enroulement étant monté à rotation sur des épaulements en forme de douilles des disques de rebord,
caractérisé en ce que la surface périphérique extérieure (7) de chaque disque de rebord (3) comporte sur sa face frontale un évidement annulaire (8), et en ce que la feuille de recouvrement (4) est bordée autour de la surface périphérique extérieure de chaque disque de rebord, de sorte que le bord rabattu se trouve dans l'évidement.

2. Rouleau d'enroulement étanche à la lumière selon la revendication 1,
caractérisé en ce que l'évidement (8) constitue une facette d'entrée en direction de la surface périphérique extérieure du disque de rebord.

3. Rouleau d'enroulement étanche à la lumière selon la revendication 1,
caractérisé en ce que la feuille de recouvrement (4) présente une largeur (B4) qui est supérieure à la largeur (B2) du rouleau de film (1).

4. Rouleau d'enroulement étanche à la lumière selon la revendication 1,
caractérisé en ce que le matériau de la feuille de recouvrement (4) est du polyéthylène pigmenté en noir.

5. Rouleau d'enroulement étanche à la lumière selon la revendication 1,
caractérisé en ce que chaque disque de rebord (3) présente une rainure concentrique dont les flancs de rainure (51; 52) forment avec l'épaulement (6) en forme de douille (6) du disque de rebord des surfaces d'appui coniques qui reçoivent de façon enfichable le manchon d'enroulement (2) et qui relient chaque disque de rebord au manchon d'enroulement par une liaison de friction.

6. Rouleau d'enroulement étanche à la lumière selon la revendication 5,
caractérisé en ce que la profondeur (TN) de la rainure (5) est au moins égale à la profondeur (TA) de l'évidement annulaire (8).

7. Rouleau d'enroulement étanche à la lumière selon la revendication 1,
caractérisé en ce que l'épaulement en forme de douille (6) des disques de rebord (3) porte au moins trois nervures de pincement (9) parallèles à l'axe,
